# EUROPEAN PATENT APPLICATION

(11) **EP 4 692 738 A1**
(43) Date of publication of application: **11.02.2026**
(21) Application number: 24779138.7
(22) Date of filing: 04.03.2024
(51) Int. Cl.: G01F 23/292, G01N 35/00

(54) **LIQUID SURFACE DETECTION DEVICE AND LIQUID SURFACE DETECTION METHOD**

(30) Priority: 31.03.2023 JP 2023057921
(71) Applicant: HITACHI HIGH-TECH CORPORATION, Tokyo 105-6409 (JP)
(72) Inventor: HORIHATA, Fumiyasu, Tokyo 105-6409 (JP); KAKUNO, Masahito, Tokyo 105-6409 (JP)
(74) Representative: Strehl & Partner mbB
(86) International application number: PCT/JP2024/008162
(87) International publication number: WO 2024/203000

(57) **Abstract**

A liquid level sensing apparatus is provided to determine a position of a liquid level with higher accuracy in contemplation of meniscus. A light emitter, a photosensor and an analysis portion are included. From a side of a container containing liquid, the light emitter emits light of wavelength components with different transmissivities between when the light passes through the liquid and when the light passes through air. The photosensor receives transmitted light resulting from the light passing through the container after being emitted from the light emitter. The analysis portion analyzes transmitted light data on transmitted light at different positions in a vertical direction, the transmitted light data being acquired by the photosensor. The analysis portion detects a top face position of the liquid in the container and also corrects the top face position based on the amount of change in the amount of transmitted light between predetermined positions of the transmitted light data.

## Description

### Technical Field

The present invention relates to a liquid level sensing apparatus and a liquid level sensing method.

### Background Art

Automatic analyzers that perform qualitative and quantitative analyses on samples such as blood and urine are used. A sample testing automation system that automatically performs a pretreatment step of performing centrifugation or the like on a sample and a transport step of transporting the sample to each automatic analyzer is also used.

In the pretreatment step, centrifugation of the sample and liquid level sensing of the sample after the centrifugation may be performed. For example, when the sample is blood, the blood is separated into serum (or plasma) and blood clot by centrifugation. After the centrifugation, the liquid level sensing apparatus of the sample testing automation system measures a boundary surface between layers in a sample container and a liquid volume.

PTL 1 discloses a liquid level sensing apparatus that detects a liquid surface present in a sample container by controlling a relative position between an light emitter and a sensing unit so as to move, in conjunction with moving the light emitter, which irradiates a part of the sample container storing a liquid substance with light, in a direction parallel to an axis of the sample container, a detection unit to a position where transmitted light can be sensed, and detecting transmitted light over an entire length of the sample container.

### Citation List

### Patent Literature

PTL 1: JP2005-516212A

### Summary of Invention

### Technical Problem

However, in PTL 1, a meniscus is not considered. Therefore, a position higher than an actual liquid surface is determined as a top face of the liquid due to the meniscus, and there is a problem in detection accuracy of the liquid level.

In view of the above problems, an object of the invention is to provide a liquid level sensing apparatus that determines a liquid level position with higher accuracy in consideration of a meniscus.

### Solution to Problem

In order to solve the above problems, a liquid level sensing apparatus according to the invention includes a light emitter that emits, from a side of a container containing liquid, light of wavelength components with different transmissivities between when light passes through the liquid and when light passes through air, a photosensor that receives transmitted light resulting from light passing through the container after being emitted from the light emitter, and an analysis portion that analyzes transmitted light data on transmitted light at different positions in a vertical direction, the transmitted light data being acquired by the photosensor. The analysis portion detects a top face position of the liquid in the container and also corrects the top face position based on the amount of change in amount of transmitted light between predetermined positions of the transmitted light data.

### Advantageous Effects of Invention

The liquid level sensing apparatus according to the invention can determine a liquid level with higher accuracy.

### Brief Description of Drawings

[Fig. 1] Fig. 1 is an overall block diagram of a liquid level sensing apparatus.
[Fig. 2] Fig. 2 is a flowchart illustrating a flow to sense a liquid level.
[Fig. 3] Fig. 3 illustrates examples of first transmitted light data and second transmitted light data.
[Fig. 4] Fig. 4 is an explanatory diagram of a sample container with a meniscus formed.
[Fig. 5] Fig. 5 illustrates an example of the amount of change in amount of transmitted light between measurement points.
[Fig. 6] Fig. 6 illustrates an example when an outlier is included in the amount of change in amount of transmitted light between measurement points.
[Fig. 7] Fig. 7 is a flowchart illustrating the flow to determine a serum top face.
[Fig. 8] Fig. 8 is an overall block diagram of a sample examination automation system equipped with the liquid level sensing apparatus.

### Description of Embodiments

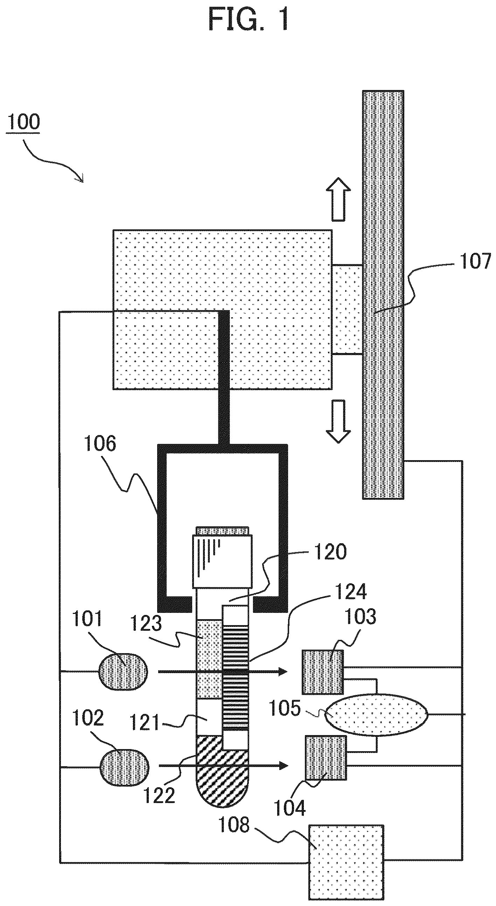

Fig. 1 is an overall block diagram of a liquid level sensing apparatus 100 according to the present embodiment. A sample to be sensed by the liquid level sensing apparatus 100 is contained in a sample container 120. The sample container 120 is a cylindrical or tapered container that is substantially transparent, has a bottomed tubular shape elongated in a vertical direction, and is made of various resin materials or various glass materials. There are various types of sample containers 120, and a user uses the sample containers 120 according to the intended use. The shapes thereof are also various, and those having different diameters, those having different heights, those having different caps, and the like are mixed and used. Fig. 1 shows an example in which a test tube is used as the sample container 120.

A sample contained in the sample container 120 is separated into a layer of a substance having a relatively large specific gravity and a layer of a substance having a relatively small specific gravity by centrifugation. The sample container 120 may store a separator 121 having a specific gravity intermediate between these substances. In the present embodiment, a blood sample collected from a patient is used as the sample. The blood sample is separated into a blood clot 122 having a relatively large specific gravity and a serum 123 (or plasma) having a relatively small specific gravity by centrifugation. In addition, the separator 121 is stored in the sample container 120, and after centrifugation, the blood clot 122 and the serum 123 are separated by the separator 121.

The sample may be a biological sample such as urine other than the blood sample, a mixed solution obtained by mixing a biological sample and a reagent, a reaction solution obtained by reacting these, or the like. In addition, separation may be performed without using a separator.

The liquid level sensing apparatus 100 determines a boundary surface between layers or an amount of a liquid in the sample container 120. The liquid level sensing apparatus 100 mainly includes a first light emitter 101, a second light emitter 102, a first photosensor 103, a second photosensor 104, an analysis portion 105, a grip portion 106, a driver 107, and a controller 108.

The first light emitter 101 emits light of a first wavelength component (for example, 1550±100 nm) from a side surface of sample container 120. The light having the first wavelength component is absorbed by the liquid, and thus is not transmitted through the liquid. That is, the light of the first wavelength component has different transmissivities between when passing through the liquid and when passing through the air.

The second light emitter 102 emits light of a second wavelength component (for example, 830±100 nm) different from the first wavelength component from the side surface of sample container 120. The light of the second wavelength component passes through the liquid.

The first photosensor 103 receives first transmitted light obtained by transmitting the light of the first wavelength component through the sample container 120.

The second photosensor 104 receives second transmitted light obtained by transmitting the light of the second wavelength component through the sample container 120.

The sample container 120 is gripped by the grip portion 106. The grip portion 106 is moved in the vertical direction by the driver 107. The driver 107 moves, in the vertical direction, the sample container 120 gripped by the grip portion 106.

The analysis portion 105 analyzes data on transmitted light at different positions in the vertical direction. Specifically, the analysis portion 105 determines, for example, a boundary surface between different liquids (layers), a boundary surface between a separator and a liquid, and a boundary surface between a liquid and a gas (air) based on the first transmitted light data acquired by the first photosensor 103 and the second transmitted light data acquired by the second photosensor 104. A method of obtaining the boundary surface will be described below.

One photosensor and one light emitter may be provided, and by providing the photosensor and the light emitter for each wavelength, the first transmitted light data and the second transmitted light data can be acquired by one movement of the sample container 120 in the vertical direction. When there is one photosensor and one light emitter, the first transmitted light data and the second transmitted light data can be acquired by acquiring the first transmitted light data, then changing a wavelength of the light emitter to the second wavelength, and acquiring the second transmitted light data.

The controller 108 controls operations of the first light emitter 101, the second light emitter 102, the first photosensor 103, the second photosensor 104, the analysis portion 105, the grip portion 106, and the driver 107. The controller 108 may have the function of the analysis portion 105. In addition, a control apparatus provided outside the liquid level sensing apparatus 100 may have the functions of the analysis portion 105 and the controller 108.

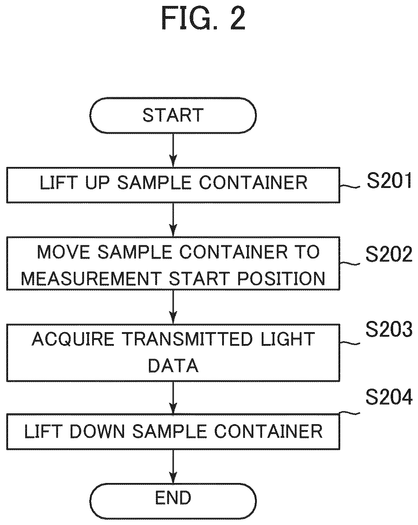

Fig. 2 is a flowchart showing a flow of liquid level sensing in the present embodiment. When the sample container 120 reaches a predetermined liquid level sensing position, the liquid level sensing apparatus 100 starts a sensing operation, and the controller 108 performs control as follows.

The controller 108 lifts up the driver 107 by gripping the arrived sample container 120 by the grip portion 106 (step S201).

Further, the controller 108 moves the sample container 120 to a transmitted light measurement start position by the driver 107 (step S202). The transmitted light measurement start position may be above or below the sample container 120.

Next, the controller 108 irradiates the sample container 120 with light by the first light emitter 101 and the second light emitter 102 while moving the sample container 120 in the vertical direction from the transmitted light measurement start position by the driver 107. At this time, the first photosensor 103 and the second photosensor 104 receive the transmitted light transmitted through the sample container 120, and acquire data on transmitted light at different positions in the vertical direction (step S203).

The transmittance of light varies depending on the type of liquid or separator, and therefore, the amount of received transmitted light (the amount of transmitted light) changes greatly when the light irradiation position is on the boundary surface between different liquids, the boundary surface between a liquid and a separator, or the boundary surface between a liquid and a gas. Therefore, a position where the amount of transmitted light changes greatly can be determined as the boundary surface. That is, the controller 108 performs scanning in the vertical direction at a predetermined position (irradiation angle) in a circumferential direction of the sample container 120 to acquire the amount of transmitted light, and the analysis portion 105 analyzes the change. The data on the amount of transmitted light may be acquired as luminance data.

The sample container 120 for which the measurement of the transmitted light has been completed is returned to the position before being lifted up by the driver 107, and the grip portion 106 stops gripping the sample container 120 (step S204). Thereafter, the sample container 120 is transported for the next step.

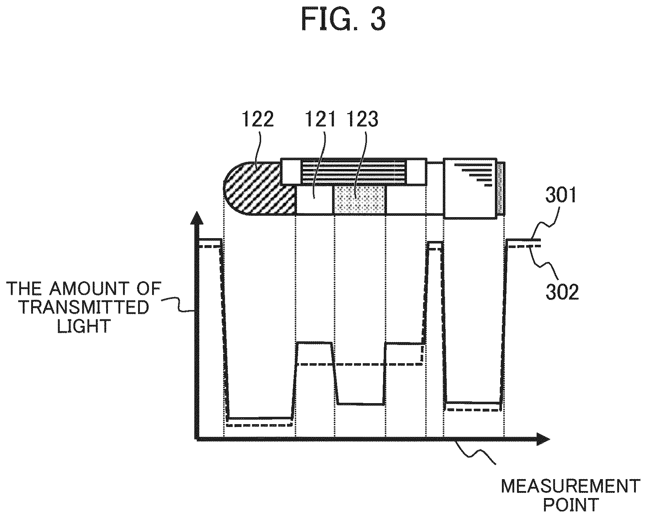

Fig. 3 shows an example of first transmitted light data 301 and second transmitted light data 302 acquired in step S203. The analysis portion 105 detects the boundary surface based on a difference between the first transmitted light data 301 (the transmitted light amount of the first transmitted light) and the second transmitted light data 302 (the transmitted light amount of the second transmitted light).

The blood clot 122 blocks both the light of the first wavelength component emitted by the first light emitter 101 and the light of the second wavelength component emitted by the second light emitter 102 while hardly transmitting them. Therefore, the amount of transmitted light when the light of the first wavelength component and the light of the second wavelength component are emitted to the blood clot 122 are substantially the same and have low values. The separator 121 easily allows both the light of the first wavelength component and the light of the second wavelength component to transmit, as compared with the blood clot 122, and therefore, the amount of transmitted light is increased.

In contrast, in the serum 123, the transmittance for the light of the first wavelength component and the transmittance for the light of the second wavelength component are greatly different. As described above, the light of the first wavelength component is absorbed by the liquid and is not transmitted through the liquid, and therefore, the amount of transmitted light (first transmitted light data 301) when the serum 123 is irradiated becomes a low value. On the other hand, the light of the second wavelength component passes through the liquid as described above, and therefore, the amount of transmitted light (second transmitted light data 302) when the serum 123 is irradiated maintains a relatively high value.

The air above the serum 123 easily allows both the light of the first wavelength component and the light of the second wavelength component to transmit, and therefore, the amount of transmitted light when the air is irradiated with both the light of the first wavelength component and the light of the second wavelength component is relatively high. A label 124 attached to the sample container 120 so as to extend over each layer of the sample hardly allows both the light of the first wavelength component and the light of the second wavelength component to transmit, as compared with air, and therefore, the amount of transmitted light decreases. The amount of transmitted light that decreases at this time varies depending on a material and the number of labels 124, and the like.

As described above, in the second transmitted light data 302, a relatively high amount of transmitted light is also obtained when the separator 121, the serum 123, and the air are irradiated. On the other hand, in the first transmitted light data 301, the amount of transmitted light when the serum 123 is irradiated is lower than the amount of transmitted light when the separator 121 is irradiated, and the amount of transmitted light when the air is irradiated is as high as the amount of transmitted light in the case of the separator 121. That is, the second transmitted light data 302 greatly changes at a boundary surface between the separator 121 and the serum 123 and a boundary surface between the serum 123 and the gas. The amount of transmitted light when the separator 121 and the air are irradiated is higher in the first transmitted light data 301 than that in the second transmitted light data 302, and the amount of transmitted light when the serum 123 is irradiated is higher in the second transmitted light data 302 than that in the first transmitted light data 301. Therefore, the analysis portion 105 can detect, as the boundary surface, a position where the first transmitted light data 301 and the second transmitted light data 302 in Fig. 3 intersect. Specifically, among positions where a difference between the first transmitted light data 301 and the second transmitted light data 302 is zero, a lower position can be detected as the boundary surface between the separator 121 and the serum 123, and an upper position can be detected as a boundary surface between the serum 123 and the gas. The analysis portion 105 calculates the amount of serum in the sample container 120 based on the detected boundary surface. The calculated amount of serum is used for a plan for dispensing the serum.

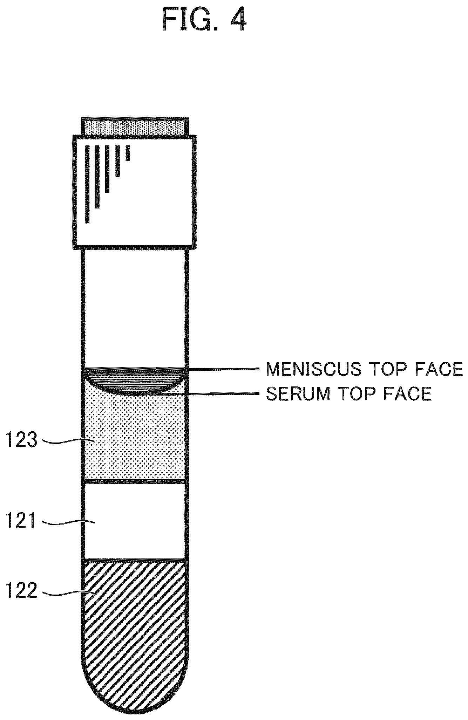

However, a top face of the serum in the sample container 120 is not actually horizontal, and a meniscus is formed as shown in Fig. 4, and the liquid level rises high toward a container wall surface. Therefore, there is a problem that the top face of the meniscus higher than a position to be originally detected is determined as the boundary surface between the serum 123 and the air only by the above-described method of determining the boundary surface. When the meniscus top face at a position higher than the serum top face is determined as the boundary surface, the amount of serum 123 is overestimated.

When the amount of serum is overestimated, the serum 123 is insufficient when the serum 123 is dispensed, and a dispensing probe may reach the separator 121 or the blood clot 122 below the serum 123 to cause clogging of the dispensing probe. When the clogging of the dispensing probe occurs, the sample aspirated when the clogging occurs cannot be used, and the sample is wasted. In addition, the inspection result is delayed due to the device stop. When a disposable tip is used for the dispensing probe, the used tip is also wasted.

Therefore, the analysis portion 105 according to the present embodiment not only detects the boundary surface between the serum 123 and the air, that is, the top face position of the serum 123 based on the amount of transmitted light included in the first transmitted light data 301 and the second transmitted light data 302, but also corrects the top face position of the serum 123 based on the amount of change in the amounts of transmitted light in the first transmitted light data 301 between predetermined positions. According to the correction, not the meniscus top face but the serum top face can be accurately determined.

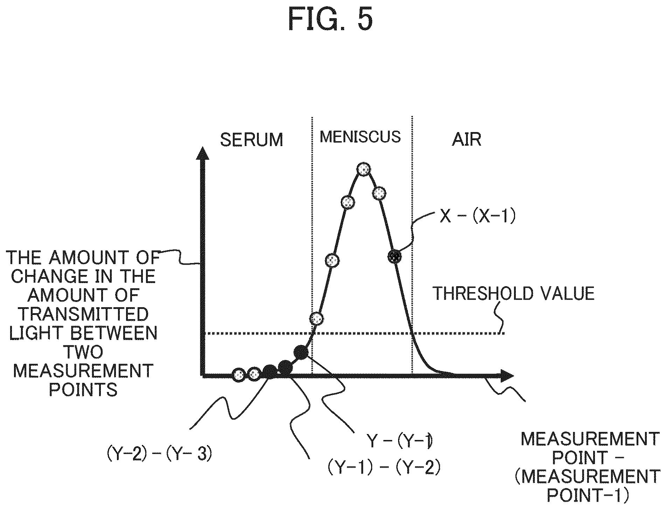

A method of correcting a serum top face by the analysis portion 105 according to the present embodiment will be described with reference to Fig. 5. Fig. 5 is a diagram in which the amounts of change in the amounts of transmitted light between consecutive measurement points (positions) are plotted for the first transmitted light data 301 around the meniscus above the serum 123. As described above, the transmitted light amount of the light of the first wavelength component is low when the serum 123 is irradiated, and the amount of transmitted light is high when the air is irradiated. In the vicinity of the center of the serum region and the air region, the amount of transmitted light is stable, and the amount of change in the amount of transmitted light between the measurement points is stable. On the other hand, in the vicinity of the boundary between an upper side of a serum region and a lower side of an air region, the variation in the amount of transmitted light is large, and the amount of change in the amount of transmitted light between the measurement points is large.

A measurement point X in Fig. 5 is a measurement point corresponding to the serum top face position detected based on the first transmitted light data 301 and the second transmitted light data 302. The measurement point X belongs to the part where the meniscus is generated, and therefore, the amount of change in the amount of transmitted light in the first transmitted light data 301 is large between the measurement point X and a measurement point X-1. The analysis portion 105 calculates the amount of change in the amounts of transmitted light between the most recent (adjacent) measurement points for a plurality of measurement points within a predetermined range below the measurement point X (on the serum 123 side). Next, the analysis portion 105 checks whether the calculated amount of change is less than a threshold value. When an amount of change less than the threshold value is present, the analysis portion 105 corrects the detected top face position so as to be a measurement point (position) at which such an amount of change is obtained. In Fig. 5, among the measurement points at which the amount of change is less than the threshold value, the measurement point is positioned at the uppermost position (air side). Therefore, the analysis portion 105 can correct the serum top face position from a position corresponding to the measurement point X to a position corresponding to the measurement point Y.

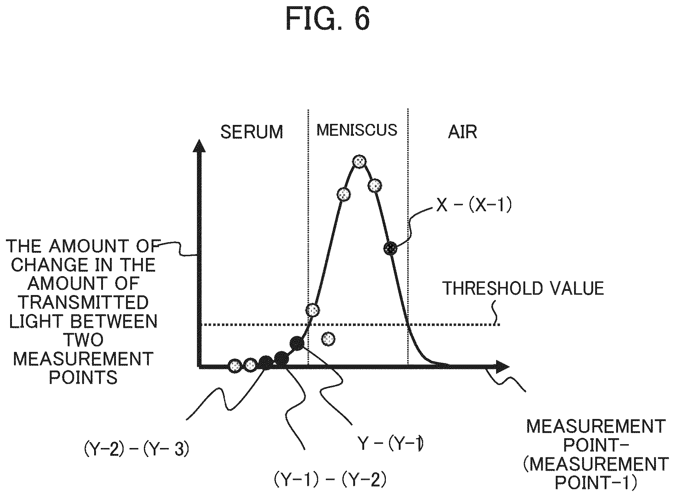

However, as illustrated in Fig. 6, an outlier may occur when the light of the first wavelength component passes through noise or a label. Therefore, it is desirable that the analysis portion 105 corrects the measurement point only if the position where the amount of change is less than the threshold value occurs continuously. Accordingly, erroneous correction can be prevented, and the position of the serum top face can be determined more accurately.

The measurement point used for correcting the serum top face may be any measurement point as long as the amount of change is less than the threshold value. When the measurement point on the upper side (air-side) is used, the meniscus is corrected, and then a higher position can be determined as the liquid level, so that a larger amount of serum can be used for dispensing. On the other hand, when the measurement point on the lower side (serum 123 side) is used, the meniscus is corrected, and then, a lower position can be determined as the liquid level, so that the risk of clogging of the dispensing probe can be further reduced. Further, which measurement point is used may be determined in advance for each apparatus or may be set as appropriate by the user.

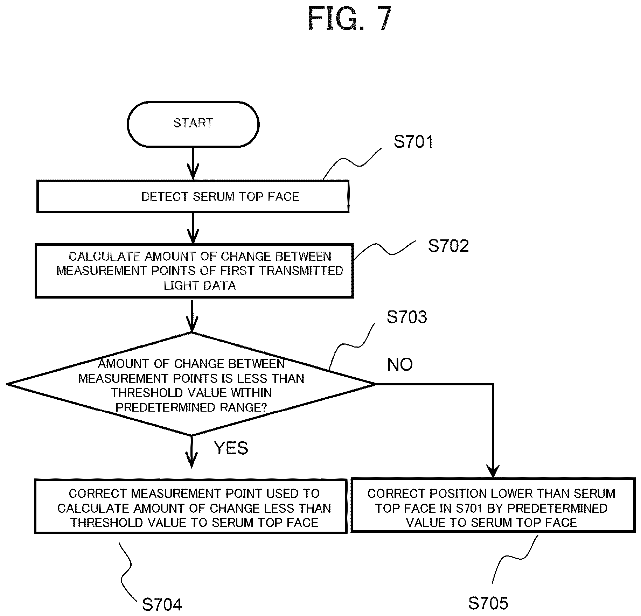

Fig. 7 is a flowchart showing a flow of determination of the serum top face by the analysis portion 105 according to the present embodiment. First, the analysis portion 105 detects the serum top face according to the first transmitted light data 301 and the second transmitted light data 302 (step S701). Next, the analysis portion 105 analyzes the first transmitted light data 301 in order to correct the detected serum top face.

Specifically, the analysis portion 105 calculates the amount of change between the measurement points of the first transmitted light data 301 (step S702). Thereafter, the analysis portion 105 checks whether the amount of change between the measurement points using the measurement points on the serum side from the detected serum top face is less than the threshold value (step S703). It is preferable that whether there is an amount of change less than the threshold value is checked within a predetermined range from the serum top face to the serum side. When the amount of transmitted light is not stable even in the serum region due to the influence of noise, a label, or the like, and the amount of change is not less than the threshold value, the meniscus can be prevented from being corrected to a position significantly lower than the actual liquid surface by providing the predetermined range. The predetermined range is preferably a range corresponding to the height of the meniscus generated on the liquid surface of the serum, and is, for example, a range of 5 mm ± 2 mm from the detected serum top face to the serum side.

When a position where the amount of change between the measurement points is less than the threshold value is present within the predetermined range, the analysis portion 105 corrects the top face position from the detected serum top face to the measurement point used for calculating the amount of change (step S704). When the position where the amount of change between the measurement points is less than the threshold value is not present within the predetermined range, the top face position is corrected to a position at a predetermined value downward from the serum top face detected in step S701 (step S705). The predetermined value is preferably a value corresponding to the height of the meniscus, and is, for example, 5 mm ± 2 mm. The predetermined range and the predetermined value may be the same value or different values.

According to the present embodiment, when the detected serum top face is corrected based on the first transmitted light data 301 acquired by irradiating the sample container 120 with the light of the first wavelength component that is not transmitted through the liquid, the serum top face can be determined more accurately, and the liquid level sensing accuracy is improved. Further, when the amount of sample is accurately known, more appropriate request items can be set for the amount of sample.

In the present embodiment described above, the detection of the position of the serum top face before the correction based on the first transmitted light data 301 and the second transmitted light data 302 has been described as an example, but the position may be detected based on image analysis using a camera or may be detected based on another method. In addition, in the present embodiment described above, the case of blood has been described as an example of a liquid level sensing target, but the present embodiment can also be applied to a case of a biological sample such as urine other than blood, a mixed solution obtained by mixing a biological sample and a reagent, a reaction solution obtained by reacting these, or the like.

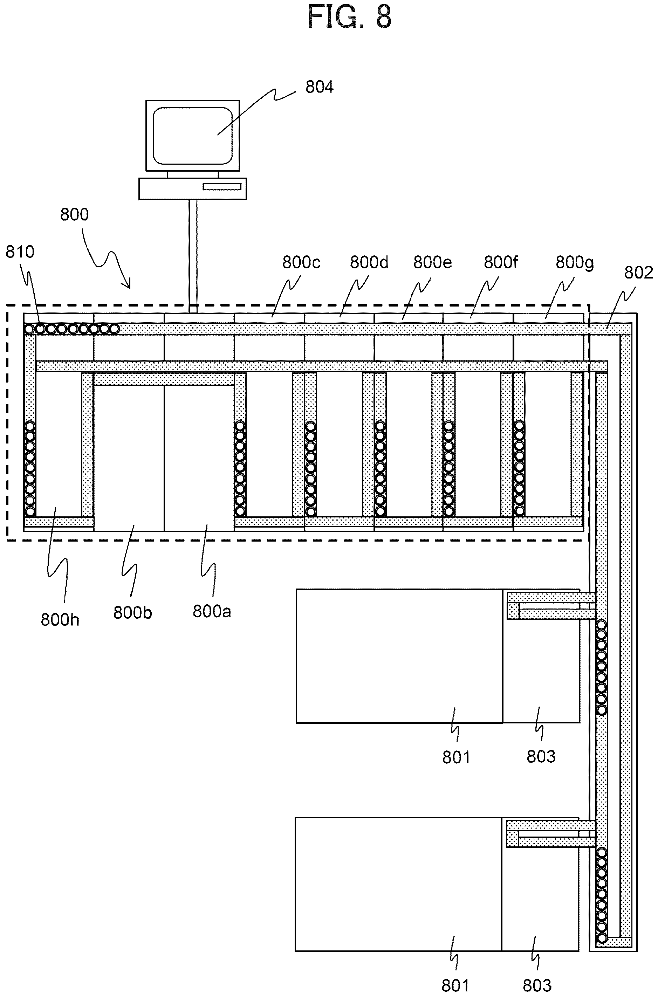

The liquid level sensing apparatus described above may be used as a single device, or may be used as an automatic analyzer, a sample pretreatment apparatus that automatically performs pretreatment of a sample, a part of a sample testing automation system, or the like. Here, an example of a case where the above-described liquid level sensing apparatus is mounted as a part of a sample testing automation system will be described with reference to Fig. 8.

Fig. 8 is a diagram showing an overall configuration of a sample testing automation system. The sample testing automation system includes a pretreatment apparatus 800 that executes various types of pretreatment on a sample contained in the sample container 120, a plurality of analyzers 801 that execute analysis processing on the sample in the sample container 120 on which the pretreatment has been executed, a transport path 802 through which a holder 810 on which the sample container 120 is mounted is transported between the pretreatment apparatus 800 and the analyzer 801, a plurality of sample transfer units 803 that are provided between the transport path 802 and each of the plurality of analyzers 801 and transfer the sample container 120 between the holder 810 transported through the transport path 802 and a rack used for mounting and transporting the sample container 120 in each analyzer 801, and a control apparatus 804 that controls the operation of the entire sample testing automation system. The control apparatus 804 includes an operation controller that controls the operation, and a storage unit that stores sample information such as analysis items and priority information of the sample contained in the sample container 120 loaded into the sample testing automation system, a relationship of each identifier with the sample, and the like.

The pretreatment apparatus 800 is implemented by coupling a plurality of units having various functions.

The pretreatment apparatus 800 includes, for example, a sample loading unit 800a, a sample storage unit 800b, a centrifuge unit 800c, a liquid determination processing unit 800d, an uncapping process unit 800e, a subsample container generation processing unit 800f, a dispensing process unit 800g, and a capping process unit 800h.

The sample loading unit 800a is a unit for loading the sample container 120 containing the sample into the sample testing automation system. In addition, a sample recognition unit, a cap body sensing unit, and a sample holder recognition unit (not shown) are disposed in the sample loading unit 800a, and the container type of the transported sample container 120, the shape of the cap of the container, and the ID information given to the holder 810 on which the sample container 120 is provided are recognized, and information for specifying the transported sample container 120 is obtained. The sample holder recognition unit (not shown) is provided in each place in the sample testing automation system, and the location of the sample container 120 can be checked by the sample holder recognition unit in each place.

The centrifuge unit 800c is a unit for performing centrifugation on the loaded sample container 120.

The liquid determination processing unit 800d is a unit for measuring and determining the amount and color of the sample contained in the transported sample container 120 by a laser light source unit and an image recognition unit (not shown).

The uncapping process unit 800e is a unit for removing a cap (not shown) from the loaded sample container 120.

The subsample container generation processing unit 800f is a unit for preparing another sample container 120 necessary for dispensing the sample contained in the loaded sample container 120 in the next dispensing process unit 800g and attaching a barcode or the like.

The dispensing process unit 800g is a unit for subdividing the sample into another sample container 120 prepared by the subsample container generation processing unit 800f in order to analyze, by the analyzer 801 or the like, the sample that has not been centrifuged or that has been centrifuged by the centrifuge unit 800c.

The capping process unit 800h is a unit for capping the sample container 120 that is uncapped or the sample container 120 after subdividing. Depending on the type of the cap used to close the cap of the sample container 120, a sample testing automation system including two or more capping process units 800h may also be configured.

The sample storage unit 800b is a unit that stores the sample container 120 capped by the capping process unit 800h.

Note that this configuration is merely an example, and another functional unit may be provided in the pretreatment apparatus 800. Each unit of the pretreatment apparatus 800 is connected by the transport path 802, and the sample container 120 mounted on the holder 810 is transported by the transport path 802.

The transport path 802 is a mechanism that transports the sample container 120 loaded from the sample loading unit 800a or the sample container 120 after subdividing, in which the sample is dispensed by the dispensing process unit 800g, to each unit in the sample testing automation system such as the centrifuge unit 800c, the dispensing process unit 800g, and the analyzer 801. The transport path 802 is also used for transport to each mechanism unit that performs a predetermined operation in each unit, such as the centrifuge unit 800c, the dispensing process unit 800g, and the analyzer 801.

The control apparatus 804 controls the operation of each unit in the sample testing automation system and each mechanism in each unit, and analyzes measurement data in the analyzer 801. The control apparatus 804 can communicate with each unit and each mechanism described above and check the location of the sample in the sample testing automation system based on the ID information of the holder 810.

The analyzer 801 is a unit for performing qualitative and quantitative analysis on components in the transported sample. As the analyzer 801, various automatic analyzers that analyze components of a sample which is subjected to the pretreatment, such as a biochemical analyzer, an immune analyzer, and a coagulation analyzer, can be used depending on the application.

The liquid level sensing apparatus 100 according to the above-described embodiment can be incorporated in, for example, the liquid determination processing unit 800d.

The invention is not limited to the above-described embodiments, and includes various modifications.

For example, a sensing target of the liquid level sensing apparatus is not limited to the sample, and may be another liquid such as a reagent. In addition, the embodiments described above are described in detail to facilitate understanding of the invention, and the invention is not necessarily limited to those including all the configurations described above.

### Reference Signs List

- 100: liquid level sensing apparatus
- 101: first light emitter
- 102: second light emitter
- 103: first photosensor
- 104: second photosensor
- 105: analysis portion
- 106: grip portion
- 107: driver
- 108: controller
- 120: sample container
- 121: separator
- 122: blood clot
- 123: serum
- 124: label
- 301: first transmitted light data
- 302: second transmitted light data
- 800: pretreatment apparatus
- 800a: sample loading unit
- 800b: sample storage unit
- 800c: centrifuge unit
- 800d: liquid determination processing unit
- 800e: uncapping process unit
- 800f: subsample container generation processing unit
- 800g: dispensing process unit
- 800h: capping process unit
- 801: analyzer
- 802: transport path
- 803: sample transfer unit
- 804: control apparatus
- 810: holder

## Claims

1. A liquid level sensing apparatus, comprising:
a light emitter that emits, from a side of a container containing liquid, light of wavelength components with different transmissivities between when light passes through the liquid and when light passes through air;
a photosensor that receives transmitted light resulting from light passing through the container after being emitted from the light emitter; and
an analysis portion that analyzes transmitted light data on transmitted light at different positions in a vertical direction, the transmitted light data being acquired by the photosensor, wherein
the analysis portion detects a top face position of the liquid in the container and also corrects the top face position based on the amount of change in amount of transmitted light between predetermined positions of the transmitted light data.

2. The liquid level sensing apparatus according to claim 1, wherein
the light emitter emits light of a first wavelength component and light of a second wavelength component which is different from the first wavelength component, the first wavelength component and the second wavelength component having different transmissivities between when light passes through the liquid and when light passes through air,
the photosensor receives first transmitted light resulting from the light of the first wavelength component passing through the container, and second transmitted light resulting from the light of the second wavelength component passing through the container, and
the analysis portion detects the top face position based on a difference between the amount of transmitted light of the first transmitted light and the amount of transmitted light of the second transmitted light.

3. The liquid level sensing apparatus according to claim 2, wherein
a higher amount of transmitted light through the liquid is provided by the second transmitted light than by the first transmitted light, and
a higher amount of transmitted light through air above the liquid is provided by the first transmitted light than by the second transmitted light.

4. The liquid level sensing apparatus according to claim 3, wherein
the analysis portion corrects the top face position to a position where the amount of change of the first transmitted light becomes less than a threshold value.

5. The liquid level sensing apparatus according to claim 4, wherein
the analysis portion corrects the top face position only if the position where the amount of change becomes less than the threshold value occurs continuously.

6. The liquid level sensing apparatus according to claim 4, wherein
the analysis portion determines whether or not the amount of change is less than the threshold value within a predetermined range downward from the top face position detected.

7. The liquid level sensing apparatus according to claim 6, wherein
if there is no position where the amount of change becomes less than the threshold value within the predetermined range, the analysis portion makes a correction to determine a position where a predetermined value is reached, in the downward direction from the top face position detected.

8. The liquid level sensing apparatus according to claim 6, wherein
the predetermined range is a range corresponding to a height of a meniscus occurring at a liquid level of the liquid.

9. The liquid level sensing apparatus according to claim 7, wherein
the predetermined value is a value corresponding to a height of a meniscus occurring at a liquid level of the liquid.

10. A liquid level sensing method, comprising the steps of:
causing a light emitter to emit, from a side of a container containing liquid, light of wavelength components with different transmissivities between when light passes through the liquid and when light passes through air;
causing a photosensor to receive transmitted light resulting from light passing through the container after being emitted from the light emitter; and
causing an analysis portion to analyze transmitted light data at different positions in a vertical direction, the transmitted light data being acquired by the photosensor, wherein
the analysis portion detects a top face position of the liquid in the container and also corrects the top face position based on the amount of change in amount of transmitted light between predetermined positions of the transmitted light data.
